# EUROPÄISCHE PATENTSCHRIFT

(11) **EP 3 020 357 B1**
(45) Veröffentlichungstag und Bekanntmachung des Hinweises auf die Patenterteilung: **18.08.2021**
(21) Anmeldenummer: 14193333.3
(22) Anmeldetag: 14.11.2014
(51) Int. Cl.: A61C 8/00

(54) **ZAHNERSATZ-ERZEUGUNGSVORRICHTUNG**
Dental prosthesis making device
Dispositif de fabrication d'une prothèse dentaire

(43) Veröffentlichungstag der Anmeldung: 18.05.2016
(73) Patentinhaber: Ivoclar Vivadent AG, 9494 Schaan (LI)
(72) Erfinder: Burger, Goran, 9472 Grabs (CH)
(74) Vertreter: Baronetzky, Klaus

(56) Entgegenhaltungen:
- JP-A- 2010 119 465
- US-A1- 2009 317 769
- US-A1- 2012 183 925
- US-A1- 2012 214 130
- None

## Beschreibung

Die Erfindung betrifft eine Zahnersatz-Erzeugungsvorrichtung, gemäß dem Oberbegriff von Anspruch 1.

Aus der US 2009/317769 A1, der US 2012/214130 A1, der US 2012/183925 A1 und der JP 2010 119465 A sind verschiedene Zahnersatz-Erzeugungsvorrichtungen bekannt, wobei die Handhabung dieser jedoch teilweise mit Nachteilen verbunden ist.

Zahnersatz wird häufig unter Zuhilfenahme eines Implantats im Mund eines Patienten befestigt. In diese Fällen wird typischerweise das Implantat nach Einbringung mit einem sogenannten Abutment versehen, welches formtreu mit dem Implantat in Verbindung steht, beispielsweise dadurch, dass die einander zugewandten Oberflächen von Implantat und Abutment unrund gestaltet sind. Die Befestigung selbst erfolgt dann über eine Abutmentschraube, die das Abutment durchdringt. Hierzu ist ein oberer Bereich des Abutments als Rohrabschnitt ausgebildet, dessen Innendurchmesser für die Aufnahme der Abutmentschraube ausreicht. Die Abutmentschraube liegt etwas unterhalb dieses Rohrabschnitts an einem meist etwas konischen Stützbereich auf, dessen Innendurchmesser kleiner als der Kopfdurchmesser der Abutmentschraube ist, durch welche hindurch aber der Schaft und das Gewinde der Abutmentschraube passt. Das Implantat weist dann in an sich bekannter Weise ein Innengewinde für den Gewindeeingriff mit dem Gewinde der Abutmentschraube auf.

Auf dem Abutment wird anschließend an die Befestigung des Abutments an dem Implantat eine Dentalstruktur befestigt. Hierzu ist der Rohrabschnitt oder obere Bereich des Abutments außen meist leicht konisch und passt formtreu in eine entsprechende Ausnehmung in der Dentalstruktur.

Derartige Lösungen werden seit etwa 30 Jahren eingesetzt; beispielhaft insofern sei auf die DE 32 41 963 C1 oder die GB 2 119 258 A verwiesen.

Gerade bei der Lösung gemäß letzterer Druckschrift besteht jedoch das Problem, dass die Drehposition der Dentalstruktur relativ zu dem Implantat nicht bzw. nicht eindeutig festgelegt ist. Eine insofern bessere und etwas neuere Lösung lässt sich aus der US 5,782,918 A1 entnehmen, die eine Rotationssicherung in Form einer Abflachung dem Rohrabschnitt des Abutments zeigt und insofern eine Rotationssicherung zwischen Implantat und Dentalstruktur realisiert.

Bei dieser Lösung ist lediglich eine einzige Größe bzw. Höhe des Abutments vorgesehen, die so klein gehalten ist, dass auch kompaktere Dentalstrukturen den Rohrabschnitt vollständig überdecken.

Um die Handhabung und insbesondere auch den Prozessablauf bei der sicheren Befestigung der Suprakonstruktion auf dem Abutment zu erleichtern, sind bereits verschiedene Hilfselemente vorgeschlagen worden.

So ist es vorgeschlagen worden, kurzerhand eine Art Schlauch mit einer Wandstärke von beispielsweise 0,5 mm auf den Rohrabschnitt des Abutments aufzuschieben, um zu gewährleisten, dass später ein ausreichender Klebespalt bereitgestellt ist. Aufgrund der Elastizität des Schlauchs ist aber keine gleichmäßige - und zudem geringe - Dicke des Klebespalts realisierbar.

Ferner sind auch vorgefertigte Hilfselemente vorgeschlagen worden, bei denen eine Rotationssicherung durch einen nach auswärts weisenden Vorsprung gewährleistet ist. Diese Art des Rotationsschutz ergibt jedoch Probleme bei der Realisierung von Brücken, die grundsätzlich von der Winkelstellung her selbstjustierend sind, so dass ein derartiger Rotationsschutz stört.

Ein weiteres Problem sind die insofern bereitgestellten Unterschnitte und Retentionsrillen, die vergleichsweise große Klebefugen generieren. Die Haftfähigkeit ist hierdurch in diesen Bereichen vergleichsweise stark reduziert, zumal dies andererseits in anderen Bereichen gegebenenfalls zur Unterschreidung von Materialwandstärken, insbesondere im marginalen Bereich der Restauration, führen kann.

Demgegenüber liegt der Erfindung die Aufgabe zugrunde, eine Zahnersatz-Erzeugungsvorrichtung gemäß dem Oberbegriff von Anspruch 1 zu schaffen, die besser und universell verwendbar ist, wobei auch das Restaurationsergebnis insbesondere hinsichtlich der Haftung auf dem Abutment verbessert ist.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass das Abutment an seinem Rohrabschnitt mit einem Außenradius vorliegt, der an keiner Stelle überschritten wird. Damit ragt keine Rotationsschutz-Feder in das Hilfselement hinein, so dass es auch keine Schwächung an dieser Stelle erfährt. Vielmehr ist es vorgesehen, den Rohrabschnitt mit einer längsachsparallelen Rille an der Außenseite als Rotationsschutzelement zu versehen und das Hilfselement dementsprechend mit einer insbesondere fakultativ vorgesehenen Rotationsschutz-Feder, die zu der Rille passt.

Wenn diese weggelassen wird, lässt sich für die Bereitstellung einer Brücke als Dentalrestauration eine beliebige Rotationsstellung einnehmen, und die erwünschte automatische Winkeleinstellung, wie sie sich bei Brücken ergibt, ist gewährleistet. Es ist auch möglich, die vorgefertigte Rotationsschutzfeder manuell zu entfernen, um diese Wirkung zu erzielen.

Erfindungsgemäß ist es damit zudem günstig, dass die Wandstärke des Hilfselements gleichmäßig und insbesondere an keiner Stelle unterschritten ist, so dass es nicht geschwächt ist. Es lässt sich beispielsweise eine Wandstärke von 150 µm bis 250 µm vorgeben, und das Hilfselement kann - optional mit industriell vorgefertigter, beispielsweise gestrahlter Oberfläche - eng an dem Rohrabschnitt anliegen, in spielfreier Passung. Die Wandstärke des Hilfselements kann auch überwiegend zwischen 100 µm und 350 µm, bevorzugt um 200 µm, betragen, jedenfalls abgesehen von den Bereichen, in denen eine Rotationssicherung vorgesehen ist.

Das Hilfselement ist vorgefertigt und weist dementsprechend eine vorkonditionierte Oberfläche mit einer vorgegebenen Rauhigkeit auf, insbesondere sowohl radial innen, also zum Abutment hin, als auch radial außen.

Bevorzugt weist das Hilfselement an seiner radialen Außenfläche eine größere Rauigkeit als an seiner radialen Innenfläche auf. Je grösser die Rauhigkeit ist, desto geringer ist die Passgenauigkeit. Dies gilt sowohl innen, also zum Abutment hin, als auch außen, also zur Suprastruktur hin. Durch diese Rauhigkeitseinstellung besteht der Vorteil für Zahntechniker, dass das Hilfselement nicht mehr nachkonfektioniert werden muss.

Die Größenabmessungen des Hilfselements und des Abutments sind so gewählt, dass das Hilfselement in spielfreier Passung auf das Abutment, insbesondere auch auf dessen Rohrabschnitt, aufschiebbar ist.

Nachdem es aus einem rückstandsfrei entfernbaren, insbesondere verbrennbarem, Material ausgebildet ist, lässt sich die Klebefuge zwischen der Suprastruktur oder Dentalstruktur der Restauration und dem Abutment in der erwünschten Qualität mit entsprechend gleichmäßiger Wandstärke gewährleisten. Als Material kommt beispielsweise eine hart eingestelltes Wachs oder auch Polyacryl in Frage, und die industriell vorkonditionierte Außenfläche des Hilfselements ermöglicht auch bei Bedarf eine Wachsmodellation und einen sicheren Anschluss der gegebenenfalls erwünschten Wachsmodellation.

Bevorzugt weist der Klebespalt oder die Klebefuge eine gleichbleibende Stärke auf. Im Bereich des Kragens des Abutments ist es allerdings bevorzugt, dass der Klebespalt reduziert ist; dies erhöht die Passgenauigkeit.

Bei Realisierung einer Klebstoffaufnahmerille wird günstigerweise überflüssiger Klebstoff verdrängt und dort aufgenommen. Wenn keine derartige Klebstoffaufnahmerille vorgesehen ist, wird überflüssiger Klebstoff nach oben vom Kragen abgewandten Rohrabschnitt hin verdrängt.

Die Realisierung einer Klebstoffaufnahmerille ist insofern nicht unbedingt erforderlich und aus Gründen der leichteren Handhabbarkeit ist es günstig, wenn eine solche nicht vorgesehen ist.

In einer modifizierten Ausgestaltung ist es vorgesehen, dass das Abutment an einem Übergang zwischen seinem Rohrabschnitt und einem umlaufenden Kragen eine Klebstoff-Aufnahmerille aufweist, die insbesondere dem Kragen benachbart umlaufend ausgebildet ist und dass das Hilfselement mindestens einen Vorsprung, insbesondere einen umlaufenden Vorsprung, aufweist, der für den Eingriff in diese Rille bestimmt ist.

In einer modifizierten Ausgestaltung ist es vorgesehen, dass die Klebe- und Modellierhilfe eine Greifhandhabe aufweist, sich bei in den Rohrabschnitt eingeführtem Zustand der Klebe- und Modellierhilfe oberhalb des Rohrabschnitts erstreckt.

In einer modifizierten Ausgestaltung ist es vorgesehen, dass die Klebe- und Modellierhilfe eine Sollbruchstelle aufweist, die sich insbesondere knapp oberhalb des Rohrabschnitts des Abutments in eingeführtem Zustand der Klebe- und Modellierhilfe erstreckt.

Bevorzugt ist das Hilfselement in vorgegebenen Höhen kürzbar. Hierzu wird eine Ausgangshöhe bereitgestellt, und günstigerweise sind Markierungen zum Kürzen auf zwei weitere Höhen vorgesehen, wobei das Kürzen besonders bevorzugt mit einem hierfür geeignetem Werkzeug erfolgt. Insofern ist das Hilfselement zu höhenvariierenden oder klassifizierbaren Abutments anpassbar.

Bevorzugt weist das Hilfselement über seine gesamte Höhe im wesentlichen die gleiche Wandstärke auf. Im Bereich des Rohrabschnitts des Abutments erstreckt es sich damit exakt angepasst an die Länge dieses Rohrabschnitts bis zum Kragen des Abutments nach unten. An der Stelle, an der der Rohrabschnitts des Abutments an einer Stirnfläche ausläuft, ist eine Innenschulter des Hilfselements ausgebildet, und der Innen- und Außendurchmesser des Hilfelements springt ab dieser Stelle unter Beibehaltung der Wandstärke zurück. Die Länge des Hilfselements oberhalb des Rohrabschnitts entspricht im wesentlichen der Länge des Hilfselements, die am Abutment anliegt.

Bevorzugt erstreckt sich die Innenseite dieses oberen Abschnitts des Hilfselements innen bündig mit dem Rohrabschnitt des Abutments. Der rohrförmige Abschnitt des Hilfselements oberhalb hat dementsprechend einen geringeren Außendurchmesser als der rohrförmige Halterabschnitt des Hilfselements, an welchem auch der Rohrabschnitt des Abutment aufgesteckt ist.

Wenn das Abutment an dem Übergang zwischen Rohrabschnitt und Kragen eine Klebstoffaufnahmerille aufweist, ist es bevorzugt, dass das Hilfselement in diese eingreift und insofern einen entsprechend nach unten/innen einwärts gewandten Vorsprung für den Eingriff in diese Rille aufweist.

Weitere Vorteile, Einzelheiten und Merkmale ergeben sich aus der nachstehenden Beschreibung zweier Ausführungsbeispiele der Erfindung anhand der Zeichnungen.

Es zeigen:
- Fig. 1: eine schematische Darstellung einer Zahnersatz-Erzeugungsvorrichtung, unter Darstellung der Dentalstruktur aus Dentalwerkstoff, des Hilfselements und des Abutments sowie auch einer Klebe- und Modellierhilfe;
- Fig. 2: das Hilfselement gemäß Fig. 1 in einer anderen Darstellung; und
- Fig. 3: eine weitere Ausgestaltung einer erfindungsgemäßen Zahnersatz-Erzeugungsvorrichtung.

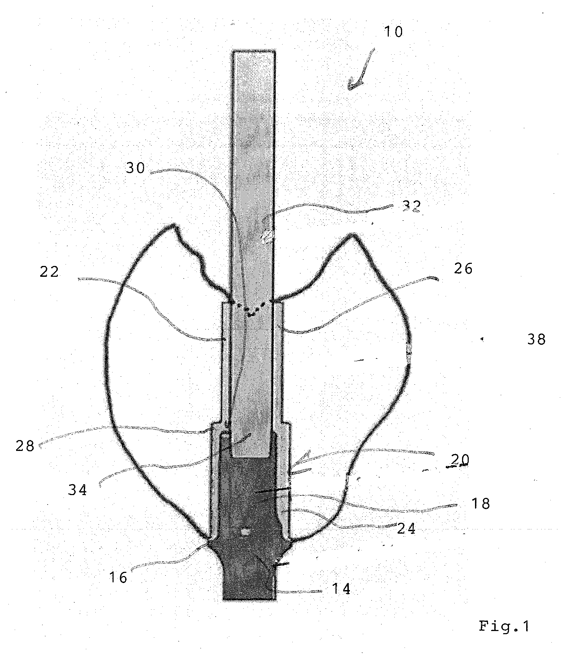

Die in Fig. 1 dargestellte Zahnersatz-Erzeugungsvorrichtung 10 weist eine Dentalstruktur 12 als Suprastruktur auf. Diese ist auf einem Abutment 14 gelagert, das in an sich bekannter Weise auf ein nicht dargestelltes Implantat aufgeschraubt ist. Auch wenn hier eine Einzelkrone dargestellt ist, versteht sich, dass in äquivalenter Weise auch eine dentale Brücke realisierbar ist.

Das Abutment weist einen Kragen 16 und eine Rohrabschnitt 18 auf. Der Rohrabschnitt 18 erstreckt sich in an sich bekannter Weise mit einer gleichbleibenden Wandstärke. An mindestens einer Stelle weist er eine Nut 20 zur Bereitstellung einer Rotationssicherung auf. Diese ist in Fig. 1 an der geringeren Wandstärke der Rohrabschnitts 18 dort zu ersehen.

Erfindungsgemäß ist ein Hilfselement 22 vorgesehen, das sich mit einer gleichbleibenden Wandstärke über den gesamten Rohrabschnitt 18 und darüber hinaus erstreckt. Das Hilfselement 22 besteht aus einem rückstandfrei entfernbarem Material wie einem Polymer und weist eine industriell vorkonditionierte Oberfläche auf.

Das Hilfselement 22 wird bei der thermischen Behandlung zur Erzeugung des Dentalrestaurationsteils, also z.B. dem Vorwärmen einer Muffel in einem Vorwärmofen, wenn das Dentalrestaurationsteil in einem gängigen Pressverfahren erzeugt wird, rückstandsfrei entfernt. Seine Wandstärke bestimmt die Dicke eines Klebespalts für das Aufkleben einer Suprastruktur auf das Abutment. Die Wandstärke des Hilfselements 22 - und damit der Klebespalt - beträgt zwischen 0,01mm und 0,5mm, bevorzugt unter 0,05mm, und kann über der Verlauf gleichförmig, aber bei Bedarf auch sich über den Verlauf ändernd ausgebildet sein.

Das Hilfselement 22 besteht aus einem rohrförmigen Halterabschnitt 24 und einem Rohrabschnitt 26 mit einem demgegenüber geringeren Durchmesser, aber gleicher Wandstärke. Am Übergang zwischen dem Halterabschnitt 24 und dem Rohrabschnitt 26 ist eine Innenschulter 28 vorgesehen, deren Gestaltung zu einer Stirnfläche 30 des Rohrabschnitts des Abutments 14 passt.

Das Hilfselement 22 ist auf dem Rohrabschnitt selbsthaltend, so dass es kraft- und/oder formschlüssig haftet, wobei die Haltekraft bevorzugt weniger als 10kN und mehr als 50N beträgt. Der Rohrabschnitt 18 des Abutments 14 weist ferner eine Anzahl von Vertiefungen, insbesondere Nuten 20, als Verdrehsicherung auf, welche insbesondere mit diesen formtreu entsprechenden Vorsprüngen des Hilfselements 22, die auch als Federn bezeichnet werden, in Eingriff stehen. Die Anzahl der Vorsprünge des Hilfselements 22 ist kleiner gleich der Anzahl der Vertiefungen 20 des Rohrabschnitts 18

Wie aus Fig 1 zudem ersichtlich ist, ist eine Klebe- und Modellierhilfe 32 vorgesehen, die in den Rohrabschnitt 26 und teilweise auch in den Rohrabschnitt 18 eingesteckt ist. Sie endet in einem leichten Konus 34 und schließt dort gegen den Rohrabschnitt 18 dicht ab. Mit der Klebe- und Modellierhilfe ist eine dichter Abschluss des Innenraums des Abutments 14 gewährleistet, so dass dort kein Material versehentlich eindringen kann, das den Zugang zur Implantatschraube beeinträchtigen würde.

Die Klebe- und Modellierhilfe 32 steckt aufgrund ihres Konus 34 sicher in dem Abutment, lässt sich jedoch bei Bedarf entfernen, nachdem sie sich deutlich über den Rohrabschnitt 26 nach oben erstreckt.

Die Klebe- und Modellierhilfe 32 ist bevozugt separat von dem Hilfselement 22 hergestellt. Es ist aber auch eine einstückige Realisierung möglich.

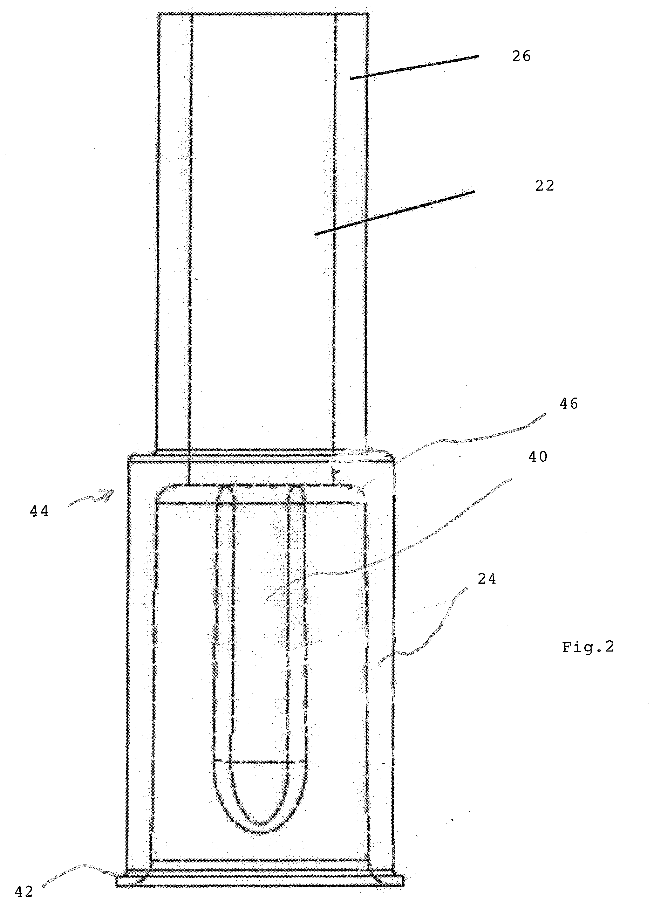

Aus Fig. 2 ist ersichtlich, in welcher Weise das Hilfselement 22 im Einzelnen ausgebildet sein kann. Gleiche Bezugszeichen weisen hier wie auch in den weiteren Ansprüchen auf gleiche Teile hin. Das Hilfselement 22 weist an seinem Halterabschnitt 24 eine radial einwärts vorspringende Feder 40 auf, die ballig ausgebildet ist und zu der Nut 20 an dem Rohrabschnitt 18 des Abutments 14 passt. Der Halterabschnitt 24 endet in einem Flansch 42, der nach radial auswärts vorspringt und eine Innenform aufweist, die zu einem entsprechendem Radius zwischen dem Kragen 16 und dem Rohrabschnitt 18 des Abutments 14 passt. Bevorzugt erstreckt sich der Flansch 42 um ein geringes Maß, wie beispielsweise 10 µm, über den Kragen 16 hinaus, um die Befestigung zu verbessern.

Bevorzugt ist an dem Hilfselement 22 an der oder an den Stellen, an denen eine Verdrehsicherung vorgesehen ist, die Materialstärke oder Wandstärke des Hilfselements 22 gegenüber der Wandstärke des Hilfselements 22 im übrigen deutlich erhöht, insbesondere etwa verdoppelt.

Im Übergangsbereich 44 zwischen dem Halterabschnitt und dem Rohrabschnitt 26 weist das Hilfselement 22 einen Innenradius 46 auf, der zu der entsprechenden Ausgestaltung an der Stirnfläche 30 des Abutments passt. Das Hilfselement liegt damit vollflächig und mit optimal gleichmäßig geringer Wandstärke an dem Abutment 14 an.

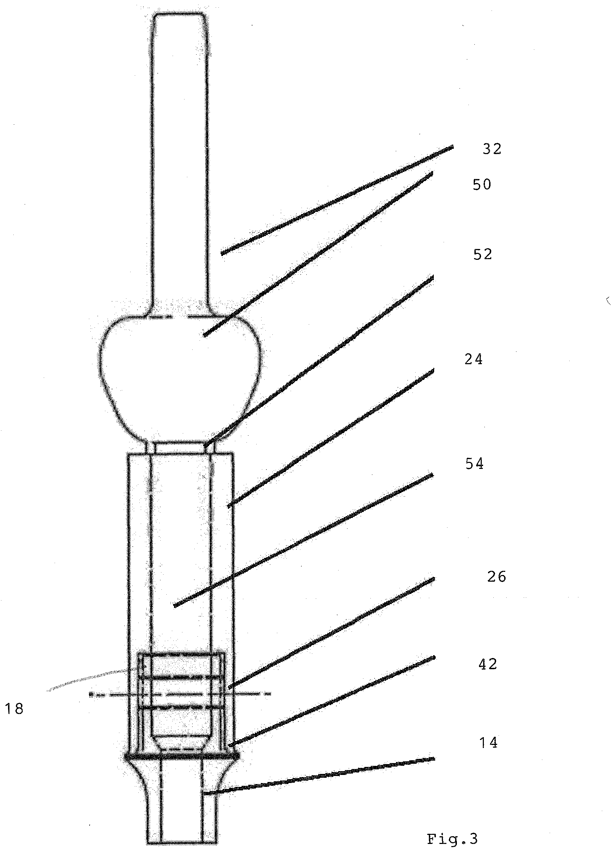

Aus Fig. 3 ist ersichtlich, in welcher Weise sich die Klebe- und Modellierhilfe 32 in das Abutment 14 hineinerstrecken kann. Die Klebe- und Modellierhilfe 32 weist hier eine Greifhandhabe 50 auf, die in dem dargestellten Ausführungsbeispiel im wesentlichen blattförmig ausgebildet ist. Knapp unterhalb der Greifhandhabe 50 ist eine Sollbruchstelle 52 vorgesehen, an welcher die Klebe- und Modellierhilfe bei Bedarf abgebrochen werden kann. Ihr Steckabschnitt 54 füllt dann den Rohrabschnitt 18 dann vollständig aus. Nachdem die Klebe- und Modellierhilfe 32 ebenfalls aus einem rückstandsfrei entfernbarem Material besteht, lässt sie sich beim rückstandsfreien Entfernen des Hilfselements 22 mitentfernen.

Die Klebe- und Modellierhilfe 32 sperrt jedenfalls den Rohrabschnitt 18 sicher gegen das Eindringen von Fremdmaterialien ab, so dass der Zugang zur Implantatschraube stets gewährleistet ist.

Während erfindungsgemäß die Verwendung mit Suprastrukturen aus Keramik, insbesondere aus einer Glaskeramik, im Vordergrund steht, ist es in einer modifizierten Ausgestaltung möglich, das Hilfselements 22 und/oder die Klebe- und Modellierhilfe 32 bei Restaurationen aus Kunststoff oder aus Komposit zu verwenden.

Das Hilfselement weist bevorzugt eine Referenzfläche und/oder eine scanbare Markierung auf, die und deren Lage im Raum von einer Scanvorrichtung, die insbesondere Teil der CAD/CAM-Vorrichtung ist, erfassbar ist. Hierdurch läßt sich beispielsweise ein von der Scanvorrichtung identifiziertes Hilfselement - dessen Wandstärke damit bekannt ist - bei der Auslegung des Klebespalt per CAM nutzen. Ebenso ist es möglich, dass die CAD/CAM-Vorrichtung basierend auf dem von dieser festgelegten Klebespalt ein über die Markierung identifizierbares Hilfselement vorgibt, woebi das Scannen der Markierung die Überprüfung erlaubt, ob das zutreffende Hilfselement eingesetzt wird.

Die Referenzflächen und/oder Markierungen sind nicht nur für die Auslegung des Klebespalts nützlich, sondern dienen insbesondere auch als Referenzfläche für die Lage des Abutments und/oder Rotationsschutz i.V. m. der Patientensituation. Je größer diese Referenzfläche ist, desto besser und genauer ist der Scanabgleich. Um die Größe der Referenzfläche zu verbessern, können das Hilfselement und/oder die Klebehilfe einteilig und/oder zweiteilig vorgesehen sein.

## Patentansprüche

1. Zahnersatz-Erzeugungsvorrichtung, , umfassend ein Hilfselement (22), eine Dentalstruktur (12), und ein Abutment (14), wobei auf oder an dem Abutment (14) eine unter Zuhilfenahme von aufbauenden Verfahren oder abtragenden Verfahren , insbesondere mittelsvon CAM, und in einem Pressverfahren erzeugte Dentalstruktur (12) aus Dentalwerkstoff, insbesondere Keramik, befestigbar ist, wobei das Abutment (14) über eine lösbare Verbindung, insbesondere eine Schraubverbindung, an einem Implantat gelagert sein kann, wobei das Abutment (14) einen Implantatanschluss, einen Kragen (16) und einen Rohrabschnitt (18) aufweist, der für die Verbindung mit der Dentalstruktur (12) bestimmt ist, **dadurch gekennzeichnet, dass** an dem Rohrabschnitt (18) anliegend und dieses umgebend ein Hilfselement (22) aus einem rückstandsfrei verbrennbaren Material angeordnet ist,
wobei das Hilfselement vorgefertigt ist, und dementsprechend eine vorkonditionierte Oberfläche mit einer vorgegebenen Rauigkeit aufweist,
wobei das Hilfselement an seiner radialen Außenfläche eine größere Rauigkeit als an seiner radialen Innenfläche aufweist.

2. Zahnersatz-Erzeugungsvorrichtung nach Anspruch 1, **dadurch gekennzeichnet, dass** der Rohrabschnitt (18) des Abutments (14) an einer Stirnfläche (30) ausläuft, die beim Einsatz des Hilfselements (22) an einer Innenschulter des Hilfselements (22) anliegt.

3. Zahnersatz-Erzeugungsvorrichtung nach einem der vorhergehenden Ansprüche, **dadurch gekennzeichnet, dass** das Hilfselement (22) sich innenseitig bündig mit der Innenseite des Rohrabschnitts (18) erstreckt.

4. Zahnersatz-Erzeugungsvorrichtung nach einem der vorhergehenden Ansprüche, **dadurch gekennzeichnet, dass** der Rohrabschnitt (18) des Abutments (14) eine Anzahl von Vertiefungen, insbesondere Nuten (20), als Verdrehsicherung aufweist, welche insbesondere mit diesen formtreu entsprechenden Vorsprüngen des Hilfselements (22) in Eingriff stehen.

5. Zahnersatz-Erzeugungsvorrichtung nach einem der vorhergehenden Ansprüche, **dadurch gekennzeichnet, dass** das Hilfselement (22), insbesondere im den Rohrabschnitt (18) überlappenden Bereich, eine Wandstärke von 0,01mm bis 0,5mm, bevorzugt von 0,01mm bis 0,06mm, aufweist, die insbesondere einem Klebespalt entspricht, und dass mit dem Ausbrennen des Hilfselements der Klebespalt erzeugbar ist

6. Zahnersatz-Erzeugungsvorrichtung nach einem der vorhergehenden Ansprüche, **dadurch gekennzeichnet, dass** das Hilfselement (22) auf dem Rohrabschnitt (18) kraft- und/oder formschlüssig haftet, wobei die Haltekraft weniger als 10kN und mehr als 50N beträgt.

7. Zahnersatz-Erzeugungsvorrichtung nach einem der vorhergehenden Ansprüche, **dadurch gekennzeichnet, dass** das Hilfselement (22) aus einem gegenüber sowohl dem Dentalwerkstoff als auch dem Abutment (14) weicheren, aber elastischeren Material ausgebildet ist, insbesondere aus einem rückstandsfrei verbrennbaren Polymer.

8. Zahnersatz-Erzeugungsvorrichtung nach einem der vorhergehenden Ansprüche, **dadurch gekennzeichnet, dass** das Hilfselement (22) an seiner radialen Außenfläche eine größere Rauigkeit als an seiner radialen Innenfläche aufweist.

9. Zahnersatz-Erzeugungsvorrichtung nach einem der vorhergehenden Ansprüche, **dadurch gekennzeichnet, dass** das Hilfselement (22) einen rohrförmigen Abschnitt mit geringerem Außendurchmesser und einen rohrförmigen Halterabschnitt (24) mit demgegenüber größerem Außendurchmesser aufweist und dass der rohrförmige Abschnitt mindestens die halbe Länge, bevorzugt 80 - 150% der Länge des Halterabschnitts (24) aufweist.

10. Zahnersatz-Erzeugungsvorrichtung nach einem der vorhergehenden Ansprüche, **dadurch gekennzeichnet, dass** das Abutment (14) einen umlaufenden Kragen (16) aufweist, der einen Implantatanschluss und seinen Rohrabschnitt (18) trennt und dass das Hilfselement (22) an dem Kragen (16) endet, wobei insbesondere ein Flansch (42) am unteren Ende des Hilfselements (22) sich um ein geringes Maß, wie beispielsweise 10 µm, über den Kragen (16) hinauserstreckt.

11. Zahnersatz-Erzeugungsvorrichtung nach einem der vorhergehenden Ansprüche, **dadurch gekennzeichnet, dass** das Abutment (14) an seinem Rohrabschnitt (18) einen Konus (34) aufweist, insbesondere mit einem Konuswinkel zwischen 0,5° und 8°, und dass das Hilfselement (22) an seinem Halterabschnitt (24) einen dazu passenden Konuswinkel aufweist und/oder beim Aufschieben auf den Rohrabschnitt (18) des Implantats in die passende Konusform gebracht ist.

12. Zahnersatz-Erzeugungsvorrichtung nach einem der vorhergehenden Ansprüche, **dadurch gekennzeichnet, dass** das Hilfselement (22) passend zu der gegebenenfalls vorzunehmenden Kürzung des Rohrabschnitts (18) des Abutments (14) in vorgegebenem Maß kürzbar ist und insbesondere entsprechende Markierungen aufweist.

13. Zahnersatz-Erzeugungsvorrichtung nach einem der vorhergehenden Ansprüche, **dadurch gekennzeichnet, dass** das Hilfselement (22) einen Rotationsschutz aufweist, der sich radial nach einwärts vorspringend achsparallel erstreckt und in mindestens eine Nut (20) des Rohrabschnitts (18) des Abutments (14) zur Bereitstellung einer Verdrehsicherung passt wobei das Hilfselement (22) insbesondere eine nach einwärts vorspringende Verdrehsicherung aufweist, die als ballig ausgestaltete Feder ausgebildet ist und unter Ausbildung eine Konvexität radial nach einwärts vorspringt.

14. Zahnersatz-Erzeugungsvorrichtung nach einem der vorhergehenden Ansprüche, **dadurch gekennzeichnet, dass** eine Klebe- und Modellierhilfe vorgesehen ist, die in den Rohrabschnitt (18) des Abutments (14) und auch in das Hilfselement (22) passt und insbesondere den Rohrabschnitt (18) innen unter Bereitstellung eines Konus (34) abschließt.

15. Zahnersatz-Erzeugungsvorrichtung nach einem der Ansprüche 15 bis 17, **dadurch gekennzeichnet, dass** die Klebe- und Modellierhilfe einen konischen Abschnitt aufweist, der sich insbesondere gewindefrei in den Rohrabschnitt (18) des Abutments (14) erstreckt.

16. Zahnersatz-Erzeugungsvorrichtung nach einem der vorhergehenden Ansprüche, **dadurch gekennzeichnet, dass** das Hilfselement (22) eine Referenzfläche und/oder eine scanbare Markierung aufweist, die und deren Lage im Raum von einer Scanvorrichtung, die insbesondere Teil der CAD/CAM-Vorrichtung ist, erfassbar ist.

## Claims

1. A tooth replacement forming device, comprising an auxiliary element (22), a dental structure (12), and an abutment (14), wherein a dental structure (12) of dental material, especially ceramics, produced using build-up or abrasive processes, especially using CAM, and a pressing process, can be fastened on or to the abutment (14), wherein the abutment (14) can be mounted on an implant via a releasable connection, especially a screw connection, wherein the abutment (14) comprises an implant connection, a collar (16) and a tube portion (18) which is for connecting to the dental structure (12),
**characterized in that** an auxiliary element (22) made of a residue-free combustible material is arranged abutting to and surrounding the tube portion (18),
wherein the auxiliary element is pre-fabricated and accordingly has a preconditioned surface having a predetermined roughness,
wherein the auxiliary element has a greater roughness on the radially outer surface thereof than on the radially inner surface thereof.

2. The tooth replacement forming device according to claim 1, **characterized in that** the tube portion (18) of the abutment (14) terminates at an end surface (30) which abuts an inner shoulder of the auxiliary element (22), when inserting the auxiliary element (22).

3. The tooth replacement forming device according to one of the preceding claims, **characterized in that** the auxiliary element (22) extends flush with the inside of the tube portion (18), on the inside.

4. The tooth replacement forming device according to one of the preceding claims, **characterized in that** the tube portion (18) of the abutment (14) comprises a number of depressions, especially grooves (20), as an anti-rotational device, which especially engage with projections of the auxiliary element (22) corresponding to that shape.

5. The tooth replacement forming device according to one of the preceding claims, **characterized in that**, especially in the area overlapping the tube portion (18), the auxiliary element (22) has a wall thickness of 0.01 mm to 0.5 mm, preferably of 0.01 mm to 0.06 mm, which especially corresponds to an adhesive gap, and **in that** the adhesive gap can be produced by burning out the auxiliary element.

6. The tooth replacement forming device according to one of the preceding claims, **characterized in that** the auxiliary element (22) adheres to the tube portion (18) in a force-fitting and/or form-fitting manner, the holding force being less than 10kN and more than 50N.

7. The tooth replacement forming device according to one of the preceding claims, **characterized in that** the auxiliary element (22) is made of a softer but more elastic material than both the dental material and the abutment (14), especially of a polymer that can be burned without leaving residues.

8. The tooth replacement forming device according to one of the preceding claims, **characterized in that** the auxiliary element (22), on the radial outer surface thereof, has a greater roughness than on the radial inner surface thereof.

9. The tooth replacement forming device according to one of the preceding claims, **characterized in that** the auxiliary element (22) comprises a tubular portion having an outer diameter and a tubular holder portion (24) having a larger outer diameter than the latter, and **in that** the tubular portion is at least half the length, preferably 80-150% of the length, of the holder portion (24).

10. The tooth replacement forming device according to one of the preceding claims, **characterized in that** the abutment (14) comprises a circumferential collar (16) separating an implant connection and the tubular portion (18) thereof and that the auxiliary element (22) terminates at the collar (16), wherein especially a flange (42) at the lower end of the auxiliary element (22) extends beyond the collar (16) by a small amount, such as 10 pm.

11. The tooth replacement forming device according to one of the preceding claims, **characterized in that** the abutment (14) comprises a cone (34) at the tube portion (18) thereof, especially having a cone angle between 0.5° and 8°, and **in that** the auxiliary element (22) has a matching cone angle at the holder portion (24) thereof and/or is brought into the matching cone shape when pushed onto the tube portion (18) of the implant.

12. The tooth replacement forming device according to one of the preceding claims, **characterized in that** the auxiliary element (22) is able to be shortened to a predetermined extent in correspondence to the shortening of the tube portion (18) of the abutment (14), if any, and especially comprises appropriate makers.

13. The tooth replacement forming device according to one of the preceding claims, **characterized in that** the auxiliary element (22) comprises an anti-rotational element which extends axially parallel in a radially inwardly projecting manner and fits into at least one groove (20) of the tube portion (18) of the abutment (14) to provide an anti-rotational device, the auxiliary element (22) especially comprising an inwardly projecting anti-rotational device which is designed as a bulbous spring and projecting radially inwards while creating a convexity.

14. The tooth replacement forming device according to one of the preceding claims, **characterized in that** an adhesive and shaping aid is provided which fits into the tube portion (18) of the abutment (14) and also into the auxiliary element (22) and, especially, seals the tube portion (18) on the inside while providing a cone (34).

15. The tooth replacement forming device according to one of claims 15 to 17, **characterized in that** the bonding and shaping aid comprises a conical portion which especially extends threadlessly into the tube portion (18) of the abutment (14).

16. The tooth replacement forming device according to one of the preceding claims, **characterized in that** the auxiliary element (22) has a reference surface and/or a scannable marker which, and the position of which in space can be detected by a scanning device which especially is part of the CAD/CAM device.

## Revendications

1. Dispositif de fabrication de prothèses dentaires, comprenant un élément auxiliaire (22), une structure dentaire (12) et un pilier (14), où une structure dentaire (12) en matériau dentaire, en particulier en céramique, est fabriquée à l'aide de procédés structurants ou ablatifs, en particulier au moyen de la FAO, et dans un procédé de pressage, où le pilier (14) peut être montée sur un implant au moyen d'une liaison amovible, en particulier d'une liaison vissée, où le pilier (14) présente une liaison d'implant, une collerette (16) et une section tubulaire (18) qui est destinée à être reliée à la structure dentaire (12), **caractérisé en ce qu'**un élément auxiliaire (22) fait d'un matériau combustible sans résidus est disposé adjacent à la section tubulaire (18) et autour de celle-ci, où l'élément auxiliaire est préfabriqué et présente par conséquent une surface avec une rugosité prédéterminée, où l'élément auxiliaire présente une plus grande rugosité sur sa surface radialement extérieure que sur sa surface radialement intérieure.

2. Dispositif de fabrication de prothèses dentaires selon la revendication 1, **caractérisé en ce que** la partie tubulaire (18) du pilier (14) se rétrécit au niveau d'une surface d'extrémité (30) qui, lorsque l'élément auxiliaire (22) est inséré, vient en butée contre un épaulement intérieur de l'élément auxiliaire (22).

3. Dispositif de fabrication de prothèses dentaires selon l'une quelconque des revendications précédentes, **caractérisé en ce que** l'élément auxiliaire (22) s'étend intérieurement à fleur de la surface intérieure de la partie tubulaire (18).

4. Dispositif de fabrication de prothèses dentaires selon l'une des revendications précédentes, **caractérisé en ce que** la partie tubulaire (18) du pilier (14) présente, en tant que dispositif anti-rotation, un certain nombre de creux, en particulier des rainures (20), qui s'engagent en particulier dans des saillies de l'élément auxiliaire (22) correspondant à cette forme.

5. Dispositif de fabrication de prothèses dentaires selon l'une des revendications précédentes, **caractérisé en ce que** l'élément auxiliaire (22), en particulier dans la zone recouvrant le tronçon tubulaire (18), présente une épaisseur de paroi de 0,01 mm à 0,5 mm, de préférence de 0,01 mm à 0,06 mm, qui correspond en particulier à un joint de collage, et **en ce que** le joint de collage peut être réalisé par calcination de l'élément auxiliaire.

6. Dispositif de fabrication de prothèses dentaires selon l'une des revendications précédentes, **caractérisé en ce que** l'élément auxiliaire (22) adhère à la section tubulaire (18) par engagement solidaire de force et/ou de forme, où la force de maintien est inférieure à 10kN et supérieure à 50N.

7. Dispositif de fabrication de prothèses dentaires selon l'une des revendications précédentes, **caractérisé en ce que** l'élément auxiliaire (22) est formé d'un matériau qui est plus souple que le matériau dentaire et que le pilier (14) mais plus élastique, en particulier d'un polymère qui peut être brûlé sans laisser de résidus.

8. Dispositif de fabrication de prothèses dentaires selon l'une des revendications précédentes, **caractérisé en ce que** l'élément auxiliaire (22) présente une plus grande rugosité sur sa surface radiale extérieure que sur sa surface radiale intérieure.

9. Dispositif de fabrication de prothèses dentaires selon l'une des revendications précédentes, **caractérisé en ce que** l'élément auxiliaire (22) présente une section tubulaire avec un diamètre extérieur plus petit et une section de support tubulaire (24) avec un diamètre extérieur plus grand par rapport à celui-ci, et **en ce que** la section tubulaire présente au moins la moitié de la longueur, de préférence de 80% à 150% de la longueur de la section de support (24).

10. Dispositif de fabrication de prothèses dentaires selon l'une des revendications précédentes, **caractérisé en ce que** le pilier (14) présente une collerette périphérique (16) qui sépare une liaison d'implant et sa section tubulaire (18) et **en ce que** l'élément auxiliaire (22) se termine à la collerette (16), où en particulier une bride (42) à l'extrémité inférieure de l'élément auxiliaire (22) s'étend au-delà de la collerette (16) dans une faible mesure, comme par exemple 10 µm.

11. Dispositif de fabrication de prothèses dentaires selon l'une des revendications précédentes, **caractérisé en ce que** le pilier (14) présente un cône (34) sur sa section tubulaire (18), en particulier avec un angle de cône compris entre 0,5° et 8°, et **en ce que** l'élément auxiliaire (22) présente sur sa section de support (24)un angle de cône adapté à celle-ci et/ou est amené à la forme de cône adaptée lorsqu'il est poussé sur la section tubulaire (18) de l'implant.

12. Dispositif de fabrication de prothèses dentaires selon l'une des revendications précédentes, **caractérisé en ce que** l'élément auxiliaire (22) peut être raccourci dans une mesure prédéterminée pour correspondre au raccourcissement de la section tubulaire (18) du pilier (14), si nécessaire, et présente en particulier des marquages correspondants.

13. Dispositif de fabrication de prothèses dentaires selon l'une des revendications précédentes, **caractérisé en ce que** l'élément auxiliaire (22) présente un élément anti-rotation qui s'étend parallèlement à l'axe de manière à faire saillie radialement vers l'intérieur et s'adapte dans au moins une rainure (20) de la section tubulaire (18) du pilier (14) afin de fournir un dispositif anti-rotation, où l'élément auxiliaire (22) présente, en particulier, un dispositif anti-rotation qui fait saillie vers l'intérieur, qui est conçu comme un ressort bombée et fait saillie radialement vers l'intérieur, en formant une convexité.

14. Dispositif de fabrication de prothèses dentaires selon l'une des revendications précédentes, **caractérisé en ce qu'**un auxiliaire de collage et de modelage est prévu, qui s'adapte dans la section tubulaire (18) du pilier (14) et également dans l'élément auxiliaire (22) et qui ferme en particulier intérieurement la section tubulaire (18) pour fournir un cône (34).

15. Dispositif de fabrication de prothèses dentaires selon l'une quelconque des revendications 15 à 17, **caractérisé en ce que** l'aide de collage et de modelage présente une section conique qui s'étend, en particulier sans filetage, dans la section tubulaire (18) du pilier (14).

16. Dispositif de fabrication de prothèses dentaires selon l'une des revendications précédentes, **caractérisé en ce que** l'élément auxiliaire (22) présente une surface de référence et/ou un marquage pouvant être balayée, qui peut être détecté et dont la position dans l'espace peut être détectée par un dispositif de balayage qui fait en particulier partie du dispositif CAO/FAO.
